# EUROPÄISCHE PATENTSCHRIFT

(11) **EP 1 292 462 B1**
(45) Veröffentlichungstag und Bekanntmachung des Hinweises auf die Patenterteilung: **03.12.2008**
(21) Anmeldenummer: 01962694.4
(22) Anmeldetag: 31.05.2001
(51) Int. Cl.: B60W 30/16, G01S 13/00

(54) **VERFAHREN ZUR ABSTANDSREGELUNG EINES FAHRZEUGS ZU EINEM VORAUSFAHRENDEN FREMDFAHRZEUG UND ABSTANDSREGELSYSTEM**
METHOD AND SYSTEM FOR CONTROLLING THE DISTANCE OF A FIRST VEHICLE IN RELATION TO A PRECEDING VEHICLE
PROCEDE ET SYSTEME POUR REGULER LA DISTANCE ENTRE UN VEHICULE DE REFERENCE ET UN VEHICULE ROULANT DEVANT CE DERNIER

(30) Priorität: 20.06.2000 DE 10030258
(43) Veröffentlichungstag der Anmeldung: 19.03.2003
(73) Patentinhaber: Daimler AG, 70327 Stuttgart (DE)
(72) Erfinder: NÖCKER, Gerhard, 73033 Göppingen (DE)
(86) Internationale Anmeldenummer: PCT/EP2001/006183
(87) Internationale Veröffentlichungsnummer: WO 2001/098101

(56) Entgegenhaltungen:
- EP-A- 0 605 104
- EP-A- 0 716 949
- WO-A-00/36435
- DE-A- 19 638 511
- US-A- 5 629 851
- PATENT ABSTRACTS OF JAPAN vol. 1998, no. 04, 31. März 1998 (1998-03-31) & JP 09 315180 A (NISSAN MOTOR CO LTD), 9. Dezember 1997 (1997-12-09)

## Beschreibung

Die Erfindung betrifft ein Verfahren zur Abstandsregelung eines Fahrzeugs und ein Abstandsregelsystem nach dem Oberbegriff des Anspruches 1 bzw. 16.

Bei derartigen Abstandsregelsystemen kann in Abhängigkeit der Absolutgeschwindigkeit des Fahrzeugs sowie des Abstands zu einem unmittelbar vorausfahrenden Fahrzeug selbsttätig eine vom Fahrzeug einzuhaltende Zielgeschwindigkeit ermittelt werden, die vom nachfolgenden Fahrzeug nicht überschritten werden darf. Ausgehend von der berechneten Zielgeschwindigkeit und gegebenenfalls weiteren aktuellen Fahrzeugzustandsgrößen werden in dem Regelsystem Stellsignale erzeugt, mittels denen der Motor, das Getriebe und/oder die Bremseinrichtung des Fahrzeugs zur Einhaltung der Zielgeschwindigkeit eingestellt werden. Zur Bestimmung der Zielgeschwindigkeit wird über eine fahrzeugeigene Messeinrichtung der Abstand zwischen dem Fahrzeug und dem vorausfahrenden Fahrzeug ermittelt. Ein derartiges Abstandregelsystem ist beispielsweise in der DE 42 09 047 C1 beschrieben worden.

Der Einstellung der Geschwindigkeit wird üblicherweise der Relativabstand bzw. die Relativgeschwindigkeit zum unmittelbar vorausfahrenden Fahrzeug zu Grunde gelegt. Insbesondere bei Fahrten auf mehrspurigen Straßen ist jedoch zu berücksichtigen, dass auf Grund unterschiedlicher Kolonnengeschwindigkeiten auf den verschiedenen Fahrspuren bei aktiviertem Abstandsregelsystem die Fahrzeuggeschwindigkeit höher sein kann als die Kolonnengeschwindigkeit auf der benachbarten Fahrspur, mit der Folge, dass der Fahrer manuell die Fahrzeuggeschwindigkeit reduzieren muss, um ein unbeabsichtigtes Überholen auf der rechten Fahrspur zu verhindern.

Ein weiteres Problem kann bei einem Spurwechsel auftreten, falls der Abstand nach vollzogenem Spurwechsel zu dem nunmehr auf der neuen Fahrspur direkt vorausfahrenden Fahrzeug größer ist als der Abstand zum vorausfahrenden Fahrzeug auf der bisherigen Fahrspur. Die zulässige Fahrzeuggeschwindigkeit kann vom Abstandsregelsystem unter Umständen selbsttätig erhöht werden, wodurch ebenfalls die Gefahr des Überholens auf der rechten Fahrspur entstehen kann.

Aus der EP 01 716 949 A1, der als nächstliegenden Stand der Technik angesehen wird, ist ein Verfahren, und eine Vorrichtung zur Abstandsregelung eines Fahrzeugs zu einem vorausfahrenden Fahrzeug entsprechend den Präambel der unabhängigen Ansprüche 1 und 16 bekannt, wobei zusätzlich auch auf benachbarten Fahrspuren fahrende Fahrzeuge berücksichtigt werden. Befindet das nächst beabstandete Fahrzeug auf der benachbarten Fahrspur wird ein Überhohlvorgang zugelassen, wenn diese Fahrspur für niedrigere Geschwindigkeiten als die eigene Fahrspur vorgesehen ist. Dieses nachst beabstandete Fahrzeug auf der benachbarten Fahrspur wird dann als Zielfahrzeug für die Abstandsregelung verwendet, wenn es sich auf einer benachbarten Fahrspur für höhere Geschwindigkeiten befindet, um ein unerlaubtes Überholen dieses Fahrzeugs auf einer Fahrspur für geringere Geschwindigkeitten zu vermeiden.

Der Erfindung liegt das Problem zugrunde, die Fahrsicherheit in Fahrzeugen mit selbstständiger Abstandseinhaltung zu verbessern.

Dieses Problem wird erfindungsgemäß bei einem Verfahren mit den Merkmalen des Anspruches 1 und bei einem Abstandsregelsystem mit den Merkmalen des Anspruches 16 gelöst.

Gemäß dem neuartigen Verfahren werden die Eigengeschwindigkeit des Fahrzeugs und/oder der Sollabstand zu dem direkt vorausfahrenden Fremdfahrzeug, welches sich auf der gleichen Fahrspur befindet, als Funktion des Abstandes zwischen mehreren seitlich versetzt fahrenden Fremdfahrzeugen bestimmt. Bei der Bestimmung der Sollwerte für den Abstand und die Eigengeschwindigkeit werden die Abstände der Fahrzeuge auf den benachbarten Fahrspuren berücksichtigt, wobei vorteilhaft Durchschnittsabstände aus einer Mehrzahl von Einzelmessungen ermittelt werden, um eine gleichmäßige, stetige Anpassung des Abstandes und der Eigengeschwindigkeit sicher zu stellen.

Die Abstände zwischen seitlich versetzt fahrenden Fahrzeugen werden beispielsweise durch Messung der Geschwindigkeiten aufeinander folgender Fremdfahrzeuge sowie der Messung des zeitlichen Abstandes, mit welchem die aufeinander folgenden Fremdfahrzeuge am eigenen Fahrzeug vorbei fahren, ermittelt.

Der Sollabstand zwischen dem eigenen Fahrzeug und dem direkt voraus fahrenden Fahrzeug kann für den Fall, dass der Abstand zwischen mindestens zwei seitlich versetzt fahrenden Fremdfahrzeugen geringer ist als.der aktuell eingestellte Sollabstand, auf den Abstand zwischen den seitlichen Fremdfahrzeugen verringert werden, wobei zweckmäßig aus Sicherheitsgründen ein vorgebbarer Mindestwert einzuhalten ist, der fahrerindividuell eingestellt werden kann, jedoch eine fahrerunabhängige Untergrenze nicht unterschreiten darf. Ebenfalls aus Sicherheitsgründen kann es angezeigt sein, den Sollabstand nur für den Fall zu verringern, dass die Relativgeschwindigkeit zwischen dem Fahrzeug und einem umgebenden Fremdfahrzeug unterhalb eines vorgebbaren Grenzwerts liegt.

Über diese Abstandseinstellung kann der Abstand zum voraus fahrenden Fahrzeug an die Abstände zwischen den seitlichen Fahrzeugen, die sich auf benachbarten Spuren befinden, angepasst werden. Dies ist auch für den Fall möglich, dass der Abstand zwischen mindestens zwei seitlich versetzt fahrenden Fremdfahrzeugen größer ist als der aktuell eingestellte Sollabstand des Fahrzeugs zum direkt vorausfahrenden Fremdfahrzeug, indem der Sollabstand auf den Abstand zwischen den seitlichen Fremdfahrzeugen vergrößert wird.

Vorteilhaft wird bei der selbsttätigen Abstandseinhaltung die Fahrzeuggeschwindigkeit eines seitlich versetzt fahrenden Fremdfahrzeugs dadurch berücksichtigt, dass die maximal zulässige Eigengeschwindigkeit des Fahrzeugs auf die Fahrzeuggeschwindigkeit des seitlich versetzten Fremdfahrzeugs begrenzt wird. Hierbei wird insbesondere die Fahrzeuggeschwindigkeit des nächstliegenden, seitlich versetzten Fremdfahrzeuges als maximal zulässige Höchstgeschwindigkeit vorgegeben. Zweckmäßig werden hierbei nur Fremdfahrzeuge berücksichtigt, welche sich in Bezug auf das Fahrzeug in einer bestimmten, vorgegebenen seitlichen Richtung befinden, wobei in Ländern mit Rechtsverkehr vorteilhaft lediglich die sich auf der linken Seite des Fahrzeugs befindlichen Fahrzeuge, in Ländern mit Linksverkehr dagegen lediglich die sich auf der rechten Seite des Fahrzeugs befindlichen Fremdfahrzeuge berücksichtigt werden. Hierdurch kann unterschiedlichen nationalen Verkehrsregeln Rechnung getragen werden, um zu verhindern, dass das Fahrzeug in regelwidriger Weise seitlich versetzt fahrende Fahrzeuge auf benachbarten Fahrspuren überholt.

Die Begrenzung der Fahrzeug-Eigengeschwindigkeit auf die Geschwindigkeit des seitlich versetzt fahrenden Fremdfahrzeuges kann sowohl für den Fall angewandt werden, dass das Fahrzeug einen Spurwechsel von einer Fahrbahn auf die nächste, seitlich angrenzende Fahrbahn durchführt als auch für den Fall greifen, dass das Fahrzeug ohne Spurwechsel mittels des Abstandsregelsystem dem vorausfahrenden Fahrzeug folgt und sich auf der angrenzenden Fahrspur in gleicher Fahrtrichtung weitere Fahrzeuge befinden. Im ersten Fall - bei einem Spurwechsel des Fahrzeugs - wird zunächst der Spurwechsel anhand des Lenkradeinschlages oder anhand einer entsprechenden Veränderung der Absolutposition des Fahrzeugs detektiert, insbesondere über ein Positionsbestimmungssystem wie z. B. GPS (Global Positioning System), wobei im Moment des Spurwechsels die Fahrzeuggeschwindigkeit des unmittelbar vorausfahrenden Fremdfahrzeuges auf der gleichen Fahrspur ermittelt und als Maximalgeschwindigkeit gespeichert wird. Nach vollzogenem Spurwechsel wird die Eigengeschwindigkeit des Fahrzeugs auf die abgespeicherte Maximalgeschwindigkeit begrenzt, so dass das Fahrzeug auf der neuen Fahrspur die Fremdfahrzeuge auf der bisherigen Fahrspur nicht überholen kann. Hierbei kann wiederum die Richtung des Spurwechsels berücksichtigt werden, indem eine Begrenzung der Eigengeschwindigkeit nur für den Fall durchgeführt wird, dass der Spurwechsel in eine bestimmte Richtung vollzogen wird, in Gegenrichtung dagegen eine Begrenzung ausgeschlossen wird, um eine selbsttätige Erhöhung der Eigengeschwindigkeit zur Durchführung eines regelkonformen Überholmanövers zu ermöglichen.

Die Begrenzung der Eigengeschwindigkeit kann aber auch unabhängig von einem Spurwechsel bei einem auf einer Fahrspur verbleibenden Fahrzeug vorteilhaft sein. In diesem Fall wird nicht nur der Abstand und die Geschwindigkeit des unmittelbar geradeaus vorausfahrenden Fremdfahrzeugs, sondern auch die Fahrzeuggeschwindigkeit eines vorausfahrenden, jedoch seitlich versetzten Fremdfahrzeugs berücksichtigt und die Fahrzeuggeschwindigkeit des seitlich versetzten Fremdfahrzeugs als Maximalgeschwindigkeit vorgegeben.

Es kann zweckmäßig sein, Kriterien für die Aufhebung der Begrenzung auf die Maximalgeschwindigkeit vorzusehen, beispielsweise einen vorzugebenden oder zu ermittelnden Mindestzeitraum, nach dessen Ablauf die Begrenzung aufgehoben wird.

Gemäß einer weiteren vorteilhaften Ausgestaltung ist vorgesehen, dass der Abstand zum unmittelbar vorausfahrenden Fremdfahrzeug, welches sich auf der gleichen Fahrspur befindet, ermittelt wird und selbsttätig auf einen zulässigen Minimal-Sollabstand verkürzt wird, welcher unter Sicherheitsaspekten bei Berücksichtigung der Verkehrssituation, insbesondere angepasst an die Absolutgeschwindigkeit des Fahrzeuges, vertretbar ist. Es soll hierdurch die Situation vermieden werden, dass ein vom Fahrer eingestellter Abstand, welcher über das Abstandsregelsystem eingehalten werden soll und welcher größer ist als der zulässige Minimal-Sollabstand, zu Situationen führt, in denen Fahrzeuge in die Lücke zwischen dem Fahrzeug und dem vorausfahrenden Fremdfahrzeug einscheren, was unter Umständen zu Gefahrensituationen führen kann. Darüber hinaus bietet dieses Verfahren den Vorteil, dass Kolonnenfahrten mit maximal möglicher Fahrzeugdichte unter Einhaltung der relevanten Sicherheitskriterien durchgeführt werden können. Dieses Verfahren kann gegebenenfalls auch unabhängig von seitlich versetzt fahrenden Fremdfahrzeugen durchgeführt werden.

Das erfindungsgemäße Abstandsregelsystem umfasst eine Messeinrichtung zur Erfassung der Fahrzeug-Zustandsgrößen sowie - Kenngrößen des Eigenfahrzeugs sowie zur Erfassung von Position und Fahrzeuggeschwindigkeit mindestens eines Fremdfahrzeugs, eine Regel- und Steuereinheit, der als Eingangssignale die Zustands- und Kenngrößen des Eigenfahrzeuges sowie Abstand und Fahrzeuggeschwindigkeit des Fremdfahrzeugs zuführbar sind und in der gemäß einer hinterlegten Regelstrategie Stellsignale erzeugt werden, welche Fahrzeug-Stelleinrichtungen zur Einstellung des zulässigen Abstandes zum vorausfahrenden Fremdfahrzeug zugeführt werden. Die Messeinrichtung umfasst zweckmäßig Mittel zur Messung der Fahrzeuggeschwindigkeit eines seitlich versetzt fahrenden Fahrzeuges, wobei die Eigengeschwindigkeit des Fahrzeugs und/oder der Sollabstand zu dem direkt vorausfahrenden Fremdfahrzeug als Funktion der Fahrzeuggeschwindigkeit eines seitlich versetzt fahrenden Fremdfahrzeugs und/oder des Abstandes zwischen mehreren seitlich versetzt fahrenden Fremdfahrzeugen bestimmbar ist.

Weitere Vorteile und zweckmäßige Ausführungen sind den weiteren Ansprüchen, der Figurenbeschreibung und den Zeichnungen zu entnehmen. Es zeigen:
- Fig. 1: eine Draufsicht auf ein Fahrzeug mit Abstandsregelsystem, wobei das Fahrzeug sich auf einer mehrspurigen Straße mit einer Mehrzahl seitlich und direkt vorausfahrender Fremdfahrzeuge befindet,
- Fig. 2: ein Ablaufdiagramm mit dem Verfahren zur Abstandsregelung im Falle eines Spurwechsels nach rechts.

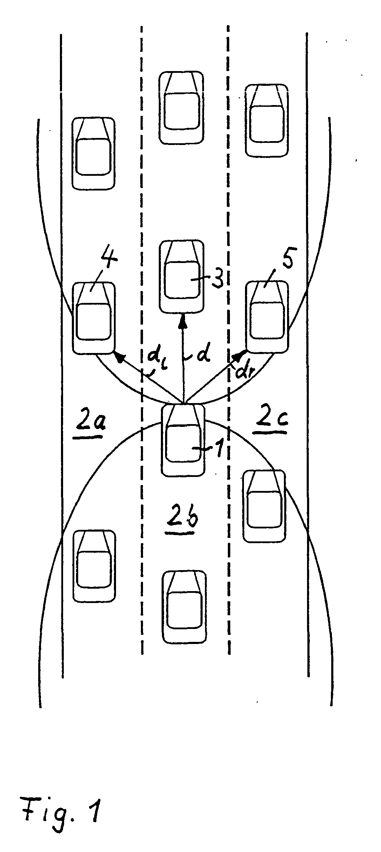

In Figur 1 ist eine Straßenverkehrsituation auf einer mehrspurigen Straße mit einer Mehrzahl von in eine Fahrtrichtung weisenden Fahrspuren 2a, 2b und 2c aufgezeigt, auf denen sich jeweils eine Mehrzahl von Fahrzeugen befinden, welche sich in Kolonnenfahrt bewegen. Ein Fahrzeug 1, welches sich auf der mittleren Fahrspur 2b der Straße bewegt, ist mit einem Abstandsregelsystem ausgestattet, welches ein teilautonomes Fahren ermöglicht und insbesondere in Abhängigkeit diverser Fahrzeug-Zustandsgrößen und - Parameter sowie äußerer Bedingungen einen definierten Abstand zu einem unmittelbar vorausfahrenden, sich auf der gleichen Fahrspur 2b befindlichen Fremdfahrzeug 3 selbsttätig einhält. Der Abstand zwischen dem Fahrzeug 1 und dem direkt vorausfahrenden Fremdfahrzeug 3 darf hierbei einen Mindestabstand nicht unterschreiten, welcher in Abhängigkeit der Eigengeschwindigkeit des Fahrzeugs 1 und gegebenenfalls auch weiterer Bedingungen, beispielsweise Umweltbedingungen, im Abstandsregelsystem des Fahrzeugsregelsystem des Fahrzeugs 1 ermittelt wird.

Das Fahrzeug 1 ist mit einer Abstands-Messeinrichtung ausgestattet, über die der Abstand d zum direkt vorausfahrenden Fahrzeug 3 messbar ist. Die Abstands-Messeinrichtung ermöglicht es außerdem, Fahrzeuge 4 und 5 zu erfassen, welche sich ebenfalls vor dem Fahrzeug 1 befinden, jedoch auf den benachbarten Fahrspuren 2a bzw. 2c links und rechts der mittleren Fahrspur 2b des Fahrzeugs 1 fahren. Der Abstand zu dem auf der linken Fahrspur 2a befindlichen Fahrzeug 4 ist mit d₁ bezeichnet, der Abstand zu dem auf der rechten Fahrspur 2c befindlichen Fahrzeug 5 mit dᵣ. Der Abstandsvektor zum linken Fahrzeug 4 schließt gegenüber der Längsmittelachse des Fahrzeugs 1 einen Winkel ein; entsprechendes gilt für den Abstandsvektor, der zu dem auf der rechten Fahrspur 2c fahrenden Fahrzeug 5 gerichtet ist. Anhand des Winkeleinschlusses zwischen den Abstandsvektoren zu den seitlich versetzt fahrenden Fahrzeugen auf benachbarten Fahrspuren gegenüber der Längsmittelachse des Fahrzeugs 1 kann eindeutig festgestellt werden, ob eines der vorausfahrenden Fremdfahrzeuge 3, 4 und 5 sich auf der gleichen Fahrspur 2b wie das Fahrzeug 1 befindet oder seitlich versetzt ist. Im Falle einer seitlichen Versetzung kann die Richtung der Seitenversetzung festgestellt werden.

Zweckmäßig sind über die Abstandsmesseinrichtung auch Fahrzeuge detektierbar, welche sich in Fahrtrichtung gesehen hinter dem Fahrzeug 1 befinden. Auch nach hinten können sowohl unmittelbar auf der gleichen Fahrspur 2b hinter dem Fahrzeug fahrende Fahrzeuge als auch seitlich versetzte, auf den Fahrspuren 2a bzw. 2c fahrende Fahrzeuge ermittelt werden. Insbesondere im Falle überholender oder auffahrender Fahrzeuge kann es zweckmäßig sein, die Eigengeschwindigkeit des Fahrzeugs 1 zu begrenzen, vorteilhaft auf den Wert des im Moment des Auffahrens bzw. Überholens festgestellten Momentanwert der Eigengeschwindigkeit, und/oder dem Fahrer eine Warnung über die auffahrenden bzw. überholenden Fahrzeuge anzuzeigen.

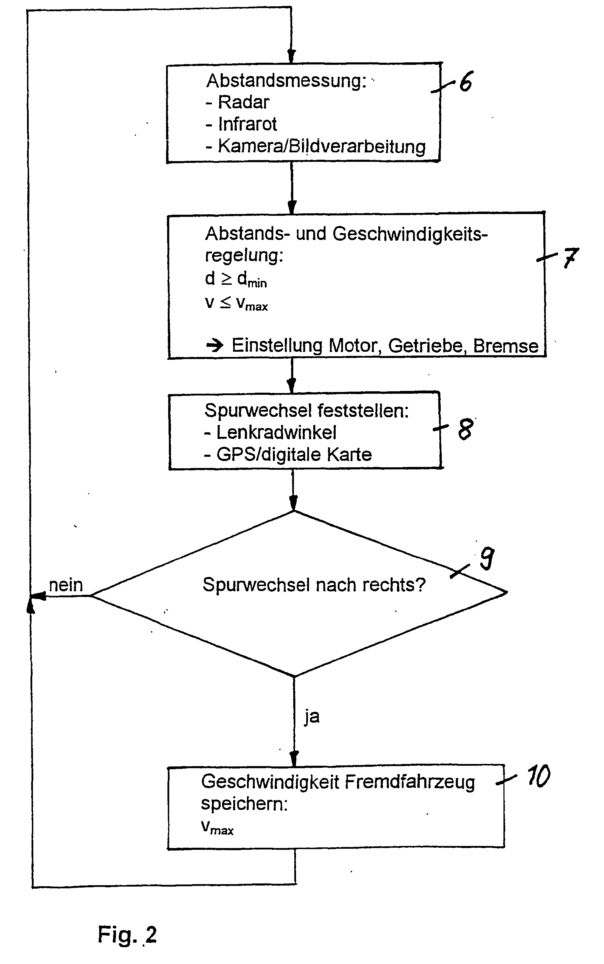

Dem Ablaufdiagramm nach Figur 2 ist ein Anwendungsfall des Verfahrens zur Abstandsregelung zu entnehmen. In einem ersten Verfahrensschritt 6 wird zunächst über die fahrzeugeigene Abstands-Messeinrichtung der Abstand zum unmittelbar vorausfahrenden, sich auf der gleichen Fahrspur befindlichen Fremdfahrzeug gemessen. Die Abstandsmessung kann hierbei mit Hilfe einer Radareinrichtung, einer Infraroteinrichtung oder über optische Systeme durchgeführt werden, welche eine Kamera zur optischen Erfassung des Fremdfahrzeugs und ein Bildverarbeitungssystem zur Auswertung des Bildes umfassen kann.

Nach der Messung des Abstandes wird in einem folgenden Verfahrensschritt 7 eine Abstandsregelung und gegebenenfalls auch eine Geschwindigkeitsregelung durchgeführt. Hierzu wird zunächst ein Mindestabstand dₘᵢₙ ermittelt, welcher aus Sicherheitsgründen nicht unterschritten werden darf. Der Mindestabstand dₘᵢₙ hängt hierbei insbesondere von der absoluten Höhe der Eigengeschwindigkeit v des Fahrzeugs ab. Zweckmäßig wird der Abstand auf einen Sollabstand eingeregelt, welcher nicht kleiner ist als der Mindestabstand dₘᵢₙ und beispielsweise vom Fahrer vorgegeben werden kann. Falls vom Fahrer kein gewünschter Abstand vorgegeben wird, kann der tatsächliche Abstand d auf den Mindestabstand dₘᵢₙ eingeregelt werden.

Als weitere Bedingung kann berücksichtigt werden, dass die tatsächliche Eigengeschwindigkeit v des Fahrzeugs eine Maximalgeschwindigkeit vₘₐₓ nicht überschreiten darf. Falls die zulässige Maximalgeschwindigkeit vₘₐₓ kleiner ist als die tatsächliche Fahrzeuggeschwindigkeit des direkt vorausfahrenden Fahrzeuges, so hat diese Bedingung für die Einstellung der Fahrzeuggeschwindigkeit Priorität vor der Regelung des Abstandes; in diesem Fall wird die tatsächliche Eigengeschwindigkeit v auf die Maximalgeschwindigkeit vₘₐₓ begrenzt, auch wenn bei dieser Eigengeschwindigkeit v der gewünschte Abstand zum vorausfahrenden Fahrzeug nicht einzuhalten ist.

Die Maximalgeschwindigkeit vₘₐₓ kann beispielsweise aus Telematiksystemen ermittelt werden. Es ist aber auch möglich, die Maximalgeschwindigkeit fahrzeugspezifisch vorzugeben, beispielsweise um ein Überschreiten der zulässigen Höchstgeschwindigkeit der aktuell aufgezogenen Fahrzeugreifen zu vermeiden. Die Maximalgeschwindigkeit kann auch vom Fahrer beeinflusst und vorgegeben werden. Darüber hinaus ist es möglich, Umwelt- und sonstige äußere Einflüsse, beispielsweise das Wetter, in die Ermittlung der Maximalgeschwindigkeit vₘₐₓ einzubeziehen.

Für den Fall, dass keine Maximalgeschwindigkeit vₘₐₓ vorgegeben wird, muss bei der Abstands- und Geschwindigkeitsregelung keine Bedingung für die Fahrzeuggeschwindigkeit erfüllt werden, so dass unmittelbar der gewünschte Sollabstand eingestellt werden kann. Der Sollabstand und gegebenenfalls die Soll-Geschwindigkeit des Fahrzeugs werden durch die Erzeugung von Stellsignalen, die dem Motor, dem Getriebe und/oder der Fahrzeugbremse zugeführt werden, eingestellt.

Im folgenden Verfahrensschritt 8 wird festgestellt, ob das Fahrzeug einen Spurwechsel durchführt. Dies kann zum Einen anhand des Lenkradwinkels detektiert werden, indem der aktuelle Lenkradwinkel mit einem insbesondere geschwindigkeitsabhängigen Grenzwert verglichen wird und ein Spurwechsel für den Fall festgestellt wird, dass dieser Grenzwert überschritten wird. Aus dem Vorzeichen des Lenkradwinkels kann außerdem festgestellt werden, ob ein Spurwechsel auf die linke oder auf die rechte Fahrspur durchgeführt wird.

Alternativ oder zusätzlich kann ein Spurwechsel auch mittels einer Positionsbestimmungseinrichtung, beispielsweise GPS, über die die aktuelle Absolutposition des Fahrzeugs festgestellt werden kann, und eine digitale Karte, die ein Straßennetz mit hinreichender Genauigkeit enthält, bestimmt werden.

Im folgenden Verfahrensschritt 9 wird die Richtung des Spurwechsels abgefragt. Es kann hierdurch unterschiedliche nationalen Regelungen Rechnung getragen werden, um zu gewährleisten, dass nach einem Spurwechsel bei noch aktivierter oder wieder zu aktivierender Abstandsregelung vom Fahrzeug kein rechtswidriger Überholvorgang durchgeführt wird, beispielsweise durch Überholen auf der rechten Fahrspur.

In Verfahrensschritt 9 wird abgefragt, ob ein Spurwechsel auf die rechte Fahrspur durchgeführt worden ist. Falls dies nicht der Fall ist, wird der Nein-Verzweigung entsprechend zum Beginn des Verfahrens zum ersten Verfahrensschritt 6 zurückgekehrt. In diesem Fall werden keine zusätzlichen Randbedingungen - resultierend aus dem Spurwechsel - für die Eigengeschwindigkeit des Fahrzeugs für die Abstands- und Geschwindigkeitsregelung vorgegeben.

Falls jedoch ein Spurwechsel nach rechts festgestellt worden ist, wird der Ja-Verzweigung des Verfahrensschrittes 9 entsprechend zum darauf folgenden Verfahrensschritt 10 fortgefahren, gemäß dem die Geschwindigkeit des direkt vorausfahrenden Fremdfahrzeuges im Augenblick des Spurwechsels ermittelt und als Maximalgeschwindigkeit vₘₐₓ abgespeichert wird. Im Anschluss an den Verfahrensschritt 10 wird wieder zum ersten Verfahrensschritt 6 zurückgekehrt und der gesamte Verfahrensablauf von neuem durchlaufen, wobei im Verfahrensschritt 7, in welchem die Abstands- und Geschwindigkeitsregelung durchgeführt wird, die Maximalgeschwindigkeit vₘₐₓ als Zusatz-Randbedingung berücksichtigt wird.

Durch die Berücksichtigung der Fahrzeuggeschwindigkeit des Fremdfahrzeugs als Maximalgeschwindigkeit vₘₐₓ soll sichergestellt werden, dass bei einem Spurwechsel auf die rechte Fahrspur das Fahrzeug bei aktivierter Abstandsregelung keinen rechtswidrigen Überholvorgang auf der rechten Fahrspur durchführt. Da die Eigengeschwindigkeit die Maximalgeschwindigkeit vₘₐₓ nicht überschreiten kann, ist ein Überholvorgang auf der rechten Fahrspur ausgeschlossen.

Es kann gegebenenfalls zweckmäßig sein, die Begrenzung auf die Maximalgeschwindigkeit vₘₐₓ nur für einen bestimmten Zeitraum aufrecht zu erhalten, wobei dieser Zeitraum sowohl ein fest vorgegebener Zeitraum als auch ein variabel zu bestimmender Zeitraum sein kann. Es ist insbesondere vorteilhaft, eine Abbruchbedingung für die Vorgabe der Maximalgeschwindigkeit vorzugeben, welche zweckmäßig darin besteht, dass mittels der Messeinrichtung im Fahrzeug zusätzlich zur Geschwindigkeit des direkt vorausfahrenden Fahrzeugs auch die Geschwindigkeit des seitlich versetzten, vorausfahrenden Fahrzeuges gemessen wird und eine fortlaufende Anpassung der Maximalgeschwindigkeit entsprechend der Geschwindigkeit des seitlich versetzt fahrenden Fremdfahrzeuges durchgeführt wird.

## Patentansprüche

1. Verfahren zur Regelung des Abstandes eines Fahrzeugs zu einem vorausfahrenden Fremdfahrzeug, bei dem Fahrzeug-Zustandsgrößen und Fahrzeug-Kenngrößen sowie der Abstand und die Fahrzeuggeschwindigkeit von mindestens einem umgebenden Fremdfahrzeug (3, 4, 5) erfasst werden und der Abstand zum Fremdfahrzeug (3, 4, 5) und die Eigengeschwindigkeit (v) des Fahrzeugs (1) auf zulässige Grenzwerte eingestellt werden,
**dadurch gekennzeichnet,**
**dass** die Eigengeschwindigkeit (v) des Fahrzeugs (1) und/oder der Sollabstand zu dem direkt vorausfahrenden Fremdfahrzeug (3) als Funktion des Abstandes zwischen mehreren seitlich versetzt fahrenden Fremdfahrzeugen (4, 5) eingestellt werden.

2. Verfahren nach Anspruch 1,
**dadurch gekennzeichnet,**
**dass** für den Fall, dass der Abstand zwischen mindestens zwei seitlich versetzt fahrenden Fremdfahrzeugen geringer ist als der aktuell eingestellte Sollabstand des Fahrzeugs (1) zum direkt vorausfahrenden Fremdfahrzeug, der Sollabstand auf den Abstand zwischen den seitlichen Fremdfahrzeugen verringert wird.

3. Verfahren nach Anspruch 2,
**dadurch gekennzeichnet,**
**dass** der Sollabstand nur bis auf einen vorgebbaren Mindestwert verringert wird.

4. Verfahren nach einem der Ansprüche 1 bis 3,
**dadurch gekennzeichnet,**
**dass** für den Fall, dass der Abstand zwischen mindestens zwei seitlich versetzt fahrenden Fremdfahrzeugen größer ist als der aktuell eingestellte Sollabstand des Fahrzeugs (1) zum direkt vorausfahrenden Fremdfahrzeug, der Sollabstand auf den Abstand zwischen den seitlichen Fremdfahrzeugen vergrößert wird.

5. Verfahren nach Anspruch 4,
**dadurch gekennzeichnet,**
**dass** der Sollabstand nur bis auf einen vorgebbaren Maximalwert vergrößert wird.

6. Verfahren nach einem der Ansprüche 2 bis 5,
**dadurch gekennzeichnet,**
**dass** der Sollabstand nur für den Fall verändert wird, dass die Relativgeschwindigkeit zwischen dem Fahrzeug und mindestens einem umgebenden Fremdfahrzeug unter einem vorgebbaren Grenzwert liegt.

7. Verfahren nach einem der Ansprüche 1 bis 6,
**dadurch gekennzeichnet,**
**dass** die Eigengeschwindigkeit (v) auf die Fahrzeuggeschwindigkeit eines seitlich versetzt fahrenden Fremdfahrzeugs (4, 5) begrenzt wird.

8. Verfahren nach einem der Ansprüche 1 bis 7,
**dadurch gekennzeichnet,**
**dass** im Falle eines Spurwechsels die Eigengeschwindigkeit (v) des Fahrzeugs (1) auf einen vorgegebenen Geschwindigkeitswert begrenzt wird.

9. Verfahren nach Anspruch 8,
**dadurch gekennzeichnet,**
**dass** im Falle eines Spurwechsels die Eigengeschwindigkeit (v) auf denjenigen Geschwindigkeitswert begrenzt wird, mit dem das Fahrzeug (1) unmittelbar vor dem Spurwechsel gefahren ist.

10. Verfahren nach einem der Ansprüche 7 bis 9,
**dadurch gekennzeichnet,**
- **dass** ein Spurwechsel.des Fahrzeugs (1) detektiert wird,
- **dass** im Moment des Spurwechsels die Fahrzeuggeschwindigkeit des auf der gleichen Fahrspur vorausfahrenden Fremdfahrzeugs (3) ermittelt und als Maximalgeschwindigkeit (vₘₐₓ) gespeichert wird,
- **dass** die Eigengeschwindigkeit (v) des Fahrzeugs (1) nach vollzogenem Spurwechsel auf die Maximalgeschwindigkeit (vₘₐₓ) begrenzt wird.

11. Verfahren nach Anspruch 10,
**dadurch gekennzeichnet,**
**dass** eine Begrenzung der Eigengeschwindigkeit (v) des Fahrzeugs (1) nur bei einem Spurwechsel in eine einzige, bestimmte Richtung durchgeführt wird.

12. Verfahren nach einem der Ansprüche 7 bis 11,
**dadurch gekennzeichnet,**
**dass** die Fahrzeuggeschwindigkeit eines vorausfahrenden, jedoch seitlich versetzt fahrenden Fremdfahrzeugs (4, 5) ermittelt und als Maximalgeschwindigkeit (vₘₐₓ) für die Eigengeschwindigkeit des Fahrzeugs vorgegeben wird.

13. Verfahren nach einem der Ansprüche 7 bis 12,
**dadurch gekennzeichnet ,**
**dass** die Begrenzung der Eigengeschwindigkeit (v) des Fahrzeugs (1) auf die Maximalgeschwindigkeit (vₘₐₓ) nach Ablauf eines vorgegebenen oder zu ermittelnden Mindestzeitraums aufgehoben wird.

14. Verfahren nach einem der Ansprüche 1 bis 13,
**dadurch gekennzeichnet,**
**dass** die Position des Fahrzeugs (1) in Absolutkoordinaten bestimmt und die Relativposition des Fremdfahrzeugs (3, 4, 5) in Bezug auf das Fahrzeug (1) gemessen wird.

15. Verfahren nach einem der Ansprüche 1 bis 14,
**dadurch gekennzeichnet,**
**dass** der Abstand (d) zum unmittelbar voraus fahrenden Fremdfahrzeug (3) ermittelt und für den Fall, dass der tatsächliche Abstand (d) größer ist als ein einzuhaltender Mindestabstand zwischen Fahrzeug (1) und Fremdfahrzeug (3), selbsttätig auf den Mindestabstand verkürzt wird.

16. Abstandsregelsystem für ein Fahrzeug, insbesondere Abstandsregelsystem zur Durchführung des Verfahrens nach einem der Ansprüche 1 bis 15, mit einer Messeinrichtung zur Erfassung von Fahrzeug-Zustandsgrößen und Fahrzeug-Kenngrößen sowie zur Erfassung von Position und Fahrzeuggeschwindigkeit von mindestens einem umgebenden Fremdfahrzeug (3, 4, 5) mit einer Regel- und Steuereinheit, in welcher in Abhängigkeit der Fahrzeug-Zustandsgrößen und des Abstandes und der Fahrzeuggeschwindigkeit des mindestens einen umgebenden Fremdfahrzeugs (3, 4, 5) gemäß einer hinterlegten Regelstrategie Stellsignale erzeugbar sind, welche Stelleinrichtungen im Fahrzeug (1) zur Einstellung eines zulässigen Abstandes zum Fremdfahrzeug (3, 4, 5) bzw. einer zulässigen Eigengeschwindigkeit (v) des Fahrzeugs (1) zuführbar sind,
**dadurch gekennzeichnet,**
**dass** die Eigengeschwindigkeit (v) des Fahrzeugs (1) und/oder der Sollabstand zu dem direkt vorausfahrenden Fremdfahrzeug (3) als Funktion des Abstandes zwischen mehreren seitlich versetzt fahrenden Fremdfahrzeugen (4, 5) eingestellt wird.

17. Abstandsregelsystem nach Anspruch 16,
**dadurch gekennzeichnet,**
**dass** die Messeinrichtung eine Positionsbestimmungseinrichtung zur Bestimmung der Absolutposition des Fahrzeugs (1) umfasst.

18. Abstandsregelsystem nach Anspruch 17,
**dadurch gekennzeichnet,**
**dass** die Messeinrichtung eine Radar-Messeinrichtung, eine Infrarot-Messeinrichtung und/oder eine Kamera mit Bilderarbeitungssystem zur Messung von Relativgeschwindigkeit und/oder Relativabstand zum Fremdfahrzeug (3, 4, 5) umfasst.

## Claims

1. Method for regulating the distance of a vehicle from a different vehicle driving in front of it, in which vehicle status parameters and vehicle characteristics as well as the distance and the speed of at least one nearby other vehicle (3, 4, 5) are determined and the distance from the other vehicle (3, 4, 5) and the speed (v) of the vehicle (1) itself are adjusted to acceptable limit values,
**characterised in that**
the speed (v) of the vehicle (1) itself and/or the desired distance from the other vehicle (3) driving directly in front of it are adjusted as a function of the distance between a plurality of other vehicles (4, 5) driving alongside.

2. Method according to Claim 1,
**characterised in that**
if the distance between at least two other vehicles driving alongside is smaller than the currently set desired distance of the vehicle (1) from the other vehicle driving directly in front of it, the said desired distance is reduced to the distance between the other vehicles driving alongside.

3. Method according to Claim 2,
**characterised in that**
the desired distance is only reduced to a predeterminable minimum value.

4. Method according to any of Claims 1 to 3,
**characterised in that**
if the distance between at least two other vehicles driving alongside is larger than the currently set desired distance of the vehicle (1) from the other vehicle driving directly in front of it, the desired distance is increased to the distance between the other vehicles driving alongside.

5. Method according to Claim 4,
**characterised in that**
the desired distance is only increased to a predeterminable maximum value.

6. Method according to any of Claims 2 to 5,
**characterised in that**
the desired distance is only changed when the relative speed between the vehicle and at least one nearby other vehicle is lower than a predeterminable limit value.

7. Method according to any of Claims 1 to 6,
**characterised in that**
the vehicle's own speed (v) is limited to the driving speed of another vehicle (4, 5) driving alongside.

8. Method according to any of Claims 1 to 7,
**characterised in that**
in the event of a lane change the speed (v) of the vehicle (1) itself is limited to a predeterminable value.

9. Method according to Claim 8,
**characterised in that**
in the event of a lane change the vehicle's own speed (v) is limited to the speed at which the vehicle (1) was driving immediately before the lane change.

10. Method according to any of Claims 7 to 9,
**characterised in that**
- a lane change of the vehicle (1) is detected,
- at the moment of the lane change the speed of the other vehicle (3) driving in front in the same lane is determined and stored as the maximum speed (vₘₐₓ),
- the speed (v) of the vehicle (1) itself is restricted to the said maximum speed (vₘₐₓ) when the lane change has been completed.

11. Method according to Claim 10,
**characterised in that**
the speed (v) of the vehicle (1) itself is only restricted when the lane is changed in a single, defined direction.

12. Method according to any of Claims 7 to 11,
**characterised in that**
the speed of another vehicle (4, 5) driving in front but to the side is determined and specified as the maximum speed (vₘₐₓ) for the vehicle's own speed.

13. Method according to any of Claims 7 to 12,
**characterised in that**
the restriction of the speed (v) of the vehicle (1) to the maximum speed (vₘₐₓ) is lifted after a specified time interval or one to be determined.

14. Method according to any of Claims 1 to 13,
**characterised in that**
the position of the vehicle (1) in absolute co-ordinated is determined and the relative position of the other vehicle (3, 4, 5) with respect to the vehicle (1) is measured.

15. Method according to any of Claims 1 to 14,
**characterised in that**
the distance (d) to the other vehicle (3) driving directly in front is determined, and if the actual distance (d) is larger than a minimum distance to be maintained between the vehicle (1) and the other vehicle (3), it is automatically reduced to the said minimum distance.

16. Distance regulation system for a vehicle, in particular a distance regulation system for implementing the method according to any of Claims 1 to 15, with a measurement device for determining vehicle status parameters and vehicle characteristics and for determining the position and driving speed of at least one nearby other vehicle (3, 4, 5), with a regulation and control unit in which, as a function of the vehicle status parameters and the distance and speed of the at least one nearby vehicle (3, 4, 5) and in accordance with an underlying regulation strategy, control signals can be generated which can be transmitted to control elements in the vehicle (1) to set a permissible separation distance from the other vehicle (3, 4, 5) or a permissible speed (v) of the vehicle (1) itself,
**characterised in that**
the speed (v) of the vehicle (1) itself and/or the desired distance from the other vehicle (3) driving directly in front is adjusted as a function of the distance between several other vehicles (4, 5) driving alongside.

17. Distance regulation system according to Claim 16,
**characterised in that**
the measurement device comprises a position-determining device to determine the absolute position of the vehicle (1).

18. Distance regulation system according to Claim 17,
**characterised in that**
the measurement device comprises a radar measurement unit, an infrared measurement unit and/or a camera with an image processing system for measuring the relative speed and/or the relative distance to the other vehicle (3, 4, 5).

## Revendications

1. Procédé de régulation de l'intervalle entre un véhicule et un véhicule externe précédent, où sont saisies des grandeurs d'état de véhicule et des grandeurs caractéristiques de véhicule ainsi que l'intervalle et la vitesse de véhicule d'au moins un véhicule externe environnant (3, 4, 5), et où l'intervalle au véhicule externe (3, 4, 5) et la vitesse propre (v) du véhicule (1) sont réglés sur des valeurs limites admissibles, **caractérisé en ce que** la vitesse propre (v) du véhicule (1) et/ou l'intervalle de consigne au véhicule externe immédiatement précédent (3) sont réglés comme fonction de l'intervalle entre plusieurs véhicules externes (4, 5) circulant latéralement décalés.

2. Procédé selon la revendication 1, **caractérisé en ce que** dans le cas où l'intervalle entre au moins deux véhicules externes circulant latéralement décalés est inférieur à l'intervalle de consigne du véhicule (1) au véhicule externe immédiatement précédent actuellement réglé, l'intervalle de consigne est réduit à l'intervalle entre les véhicules externes latéraux.

3. Procédé selon la revendication 2, **caractérisé en ce que** l'intervalle de consigne n'est diminué que jusqu'à une valeur minimale prescriptible.

4. Procédé selon l'une des revendications 1 à 3, **caractérisé en ce que** dans le cas où l'intervalle entre au moins deux véhicules externes circulant latéralement décalés est supérieur à l'intervalle de consigne du véhicule (1) au véhicule externe immédiatement précédent actuellement réglé, l'intervalle de consigne est agrandi à l'intervalle entre les véhicules externes latéraux.

5. Procédé selon la revendication 4, **caractérisé en ce que** l'intervalle de consigne n'est augmenté que jusqu'à une valeur maximale prescriptible.

6. Procédé selon l'une des revendications 2 à 5, **caractérisé en ce que** l'intervalle de consigne n'est modifié que dans le cas où la vitesse relative entre le véhicule et au moins un véhicule externe environnant est inférieure à une valeur limite prescriptible.

7. Procédé selon l'une des revendications 1 à 6, **caractérisé en ce que** la vitesse propre (v) est limitée à la vitesse de véhicule d'un véhicule externe (4, 5) circulant latéralement décalé.

8. Procédé selon l'une des revendications 1 à 7, **caractérisé en ce que** dans le cas d'un changement de voie, la vitesse propre (v) du véhicule (1) est limitée à une valeur de vitesse prescriptible.

9. Procédé selon la revendication 8, **caractérisé en ce que** dans le cas d'un changement de voie, la vitesse propre (v) est limitée à la valeur de vitesse à laquelle le véhicule (1) a circulé immédiatement avant le changement de voie.

10. Procédé selon l'une des revendications 7 à 9, **caractérisé**
■ en ce qu'un changement de voie du véhicule (1) est détecté,
■ en ce qu'au moment du changement de voie, la vitesse de véhicule du véhicule externe (3) précédent circulant dans la même voie est déterminée et mémorisée comme vitesse maximale (vₘₐₓ),
■ en ce que la vitesse propre (v) du véhicule (1) est limitée à la vitesse maximale (vₘₐₓ) une fois le changement de voie effectué.

11. Procédé selon la revendication 10, **caractérisé en ce qu'**une limitation de la vitesse propre (v) du véhicule (1) n'est appliquée qu'en cas de changement de voie dans une seule direction déterminée.

12. Procédé selon l'une des revendications 7 à 11, **caractérisé en ce que** la vitesse de véhicule d'un véhicule externe (4, 5) précédent, mais circulant latéralement décalé, est déterminée et prescrite en tant que vitesse maximale (vₘₐₓ) pour la vitesse propre du véhicule.

13. Procédé selon l'une des revendications 7 à 12, **caractérisé en ce que** la limitation de la vitesse propre (v) du véhicule (1) à la vitesse maximale (vₘₐₓ) est annulée à l'issue d'un laps de temps minimal prescrit ou à déterminer.

14. Procédé selon l'une des revendications 1 à 13, **caractérisé en ce que** la position du véhicule (1) est déterminée avec des coordonnées absolues, et la position relative du véhicule externe (3, 4, 5) mesurée par rapport au véhicule (1).

15. Procédé selon l'une des revendications 1 à 14, **caractérisé en ce que** l'intervalle (d) au véhicule externe (3) immédiatement précédent est déterminé, et est automatiquement ramené à l'intervalle minimum dans le cas où l'intervalle (d) effectif est supérieur à un intervalle minimum à respecter entre le véhicule (1) et le véhicule externe (3).

16. Système de régulation d'intervalle pour un véhicule, en particulier système de régulation d'intervalle pour l'exécution du procédé selon l'une des revendications 1 à 15, avec un dispositif de mesure pour la saisie de grandeurs d'état de véhicule et de grandeurs caractéristiques de véhicule, ainsi que pour la saisie de position et de vitesse de véhicule d'au moins un véhicule externe environnant (3, 4, 5), avec une unité de commande et de régulation où des signaux de réglage peuvent être générés en fonction des grandeurs d'état de véhicule, de l'intervalle et de la vitesse de véhicule du ou des véhicules externes environnants (3, 4, 5) conformément à une stratégie de régulation mémorisée, lesdits signaux de réglage pouvant être transmis à des dispositifs de réglage dans le véhicule (1) pour le réglage d'un intervalle admissible au véhicule externe (3, 4, 5), ou d'une vitesse propre (v) admissible du véhicule (1), **caractérisé en ce que** la vitesse propre (v) du véhicule (1) et/ou l'intervalle de consigne au véhicule externe immédiatement précédent (3) sont réglés comme fonction de l'intervalle entre plusieurs véhicules externes (4, 5) circulant latéralement décalés.

17. Système de régulation d'intervalle selon la revendication 16, **caractérisé en ce que** le dispositif de mesure comprend un dispositif de détermination de position, pour la détermination de la position absolue du véhicule (1).

18. Système de régulation d'intervalle selon la revendication 17, **caractérisé en ce que** le dispositif de mesure comprend un dispositif de mesure radar, un dispositif de mesure à infrarouge et/ou une caméra à système de traitement d'image pour la mesure de la vitesse relative et/ou de l'intervalle relatif au véhicule externe (3, 4, 5).
